# EUROPEAN PATENT APPLICATION

(11) **EP 4 641 902 A1**
(43) Date of publication of application: **29.10.2025**
(21) Application number: 25171060.4
(22) Date of filing: 16.04.2025
(51) Int. Cl.: H02M 1/36

(54) **POWER CONVERTER AND METHOD FOR ACTIVATING POWER CONVERTER**

(30) Priority: 22.04.2024 CN 202410488356
(71) Applicant: Huawei Digital Power Technologies Co., Ltd., Shenzhen, Guangdong 518043 (CN)
(72) Inventor: Zhao, Yazhu, Shenzhen 518043 (CN); Gao, Yongbing, Shenzhen 518043 (CN); Yu, Bo, Shenzhen 518043 (CN); Cheng, Guang, Shenzhen 518043 (CN)
(74) Representative: Gill Jennings & Every LLP

(57) **Abstract**

Embodiments of this application provide a power converter and a method for activating a power converter. The power converter includes a direct current conversion circuit, an inverter circuit, a bus capacitor, and a controller, where the direct current conversion circuit is connected between a direct current power supply and the bus capacitor, and the inverter circuit is connected between the bus capacitor and an alternating current load; and the controller is configured to control an action of a switching transistor in the direct current conversion circuit when a startup time interval reaches a time interval threshold, so that a voltage output by the direct current conversion circuit to the bus capacitor reaches a target voltage value, where the target voltage value is less than a rated voltage of the bus capacitor, and the startup time interval is a time interval between a current power-on time and a last power-on time of the direct current conversion circuit. According to this application, detecting whether storage is beyond a shelf life and automatic activation and reforming can be performed on the bus capacitor in the power converter, and activation and reforming efficiency is high.

## Description

### TECHNICAL FIELD

This application relates to the field of power electronics, and in particular, to a power converter and a method for activating a power converter.

### BACKGROUND

As a type of capacitor, an electrolytic capacitor includes an aluminum electrolytic capacitor or the like. As a passive device, the aluminum electrolytic capacitor may be used as a power converter device in a new energy power supply system. The aluminum electrolytic capacitor usually uses a metal foil, for example, a high-purity aluminum foil, as an anode, uses an insulating oxide layer of the metal foil, for example, aluminum oxide, as a dielectric, and uses electrolytic paper impregnated with electrolyte as a cathode. When the aluminum electrolytic capacitor is used as a bus capacitor in the power converter, and the power converter is not connected to a direct current power supply for a long time, after the aluminum electrolytic capacitor in the power converter is stored for a long time, especially after the aluminum electrolytic capacitor is stored for a long time at a temperature beyond a normal temperature, an oxide film of the anode foil chemically reacts with the electrolyte, and potential risks include a decrease in a withstand voltage of the anode foil, an increase in a leakage current, and the like. If the power converter is powered on again after a long period of time, and the electrolytic capacitor that has been stored for a long time is directly put into normal operation, for example, a rated voltage is directly applied to the electrolytic capacitor, a leakage current on the electrolytic capacitor is excessively high. This results in internal heat generation and a weakened local voltage withstand capability, potentially damaging the insulating oxide layer of the metal foil or even causing breakdown of the electrolytic capacitor. Generally, electrolytic capacitor manufacturers require activation and reforming of an electrolytic capacitor stored beyond a shelf life, to restore an oxide film of an anode foil and reduce a leakage current of the electrolytic capacitor to a level before prolonged storage, so as to reduce a failure probability of the electrolytic capacitor. Currently, to implement activation and reforming of an electrolytic capacitor, an external professional device such as an external power supply needs to be connected or a hardware circuit needs to be added, which increases product costs. In addition, whether storage is beyond a shelf life needs to be manually identified and an activation operation needs to be completed, resulting in low activation and reforming efficiency.

### SUMMARY

Embodiments of this application provide a power converter and a method for activating a power converter, so that detecting whether storage is beyond a shelf life and automatic activation and reforming can be performed on a bus capacitor in the power converter, activation and reforming efficiency is high, without requiring a professional device such as an external power supply or adding a hardware circuit.

According to a first aspect, this application provides a power converter. The power converter includes a direct current conversion circuit, an inverter circuit, a bus capacitor, and a controller, where the direct current conversion circuit is connected between a direct current power supply and the bus capacitor, and the inverter circuit is connected between the bus capacitor and an alternating current load; and the controller is configured to control an action of a switching transistor in the direct current conversion circuit when a startup time interval reaches a time interval threshold, so that a voltage output by the direct current conversion circuit to the bus capacitor reaches a target voltage value, where the target voltage value is less than a rated voltage of the bus capacitor, and the startup time interval is a time interval between a current power-on time and a last power-on time of the direct current conversion circuit.

In this application, the power converter automatically detects, by using the controller, a time interval between a current power-on time and a last power-on time of the direct current conversion circuit, that is, detects a storage time of the bus capacitor in a non-powered-on state, so that activation and reforming are automatically performed when it is detected that the bus capacitor has been stored beyond a shelf life, and no manual intervention is required. The activation and reforming efficiency is high. The power-on time may be a time at which the first end of the direct current conversion circuit is connected to the direct current power supply and starts to work, or the power-on time may be a time at which the power converter starts; and the time interval threshold may be 6 to 36 months, or the like. In addition, the controller controls the direct current conversion circuit in the power converter, so that a voltage output by the direct current conversion circuit to the bus capacitor reaches a target voltage value, to implement activation and reforming on the bus capacitor, that is, restore an oxide film of a metal foil in the bus capacitor, without requiring a professional device such as an external power supply or adding a hardware circuit, thereby reducing product costs. In addition, a voltage connected to the bus capacitor does not exceed a rated voltage, so as to ensure that a charging current or a leakage current of the bus capacitor does not exceed a leakage current specification of the capacitor, thereby improving safety of the device.

In a possible implementation, the controller is configured to control the voltage output by the direct current conversion circuit to the bus capacitor to be boosted, and the voltage of the bus capacitor to reach the target voltage value after the voltage of the bus capacitor is boosted for target duration. Herein, the controller controls a bus voltage to be boosted slowly at a set rate until the bus voltage reaches the target voltage value, so as to avoid a risk that the bus capacitor is broken down by a high voltage because the bus capacitor is boosted too fast.

In a possible implementation, the controller is configured to: control the voltage output by the direct current conversion circuit to the bus capacitor to be boosted a plurality of times until the voltage at both ends of the bus capacitor reaches the target voltage value, where an amplitude of each voltage boost is a preset voltage value; and after each voltage boost, control the voltage output by the direct current conversion circuit to the bus capacitor to remain unchanged within a preset time interval. Herein, the controller controls the bus voltage to be boosted a plurality of times, where an amplitude of each voltage boost is a preset voltage value; and after each voltage boost, controls the bus voltage to remain unchanged within a preset time interval, so as to avoid a risk that the bus capacitor is broken down by a high voltage because the bus capacitor is boosted too fast. In addition, the controller controls the bus voltage to be boosted slowly and maintained for a period of time after each voltage boost, so that an oxide film of a metal foil in the bus capacitor is more fully restored.

In a possible implementation, the direct current power supply is a photovoltaic string, and the target voltage value is an open-circuit voltage of the photovoltaic string. A voltage connected to the bus capacitor does not exceed a rated voltage, so as to ensure that a charging current or a leakage current of the bus capacitor does not exceed a leakage current specification of the capacitor, thereby improving safety of the device.

In a possible implementation, the direct current conversion circuit is connected to the bus capacitor through a positive direct current bus and a negative direct current bus, and the target voltage value is a maximum voltage that the positive direct current bus and the negative direct current bus are able to withstand. A voltage connected to the bus capacitor does not exceed a rated voltage, so as to ensure that a charging current or a leakage current of the bus capacitor does not exceed a leakage current specification of the capacitor, thereby improving safety of the device.

In a possible implementation, the direct current conversion circuit includes an input capacitor, an inductor, a switching transistor, and a diode, where a first end of the input capacitor is configured to connect to a positive electrode of the direct current power supply, the first end of the input capacitor is connected to a first end of the switching transistor through the inductor, the first end of the switching transistor is connected to a first end of the bus capacitor through the diode, a second end of the input capacitor is configured to connect to a negative electrode of the direct current power supply, and the second end of the input capacitor is connected to a second end of the switching transistor and a second end of the bus capacitor; and the controller is configured to control a change in a duty cycle of the switching transistor, so that the voltage output by the direct current conversion circuit to the bus capacitor reaches the target voltage value. The controller controls the change in a duty cycle of the switching transistor, so that the voltage output by the direct current conversion circuit to the bus capacitor reaches a target voltage value, to implement activation and reforming of the bus capacitor, without requiring a professional device such as an external power supply or adding a hardware circuit.

In a possible implementation, the direct current conversion circuit includes an input capacitor, an inductor, a switching transistor, and a diode, where a first end of the input capacitor is configured to connect to a positive electrode of a direct current power supply, the first end of the input capacitor is connected to a first end of the inductor through the switching transistor, the first end of the inductor is connected to a first end of the bus capacitor through the diode, a second end of the input capacitor is configured to connect to a negative electrode of the direct current power supply, and the second end of the input capacitor is connected to a second end of the inductor and a second end of the bus capacitor; and the controller is configured to control a change in a duty cycle of the switching transistor, so that the voltage output by the direct current conversion circuit to the bus capacitor reaches a target voltage value. The controller controls the change in a duty cycle of the switching transistor, so that the voltage output by the direct current conversion circuit to the bus capacitor reaches a target voltage value, to implement activation and reforming of the bus capacitor, without requiring a professional device such as an external power supply or adding a hardware circuit.

In a possible implementation, the bus capacitor includes a first bus capacitor and a second bus capacitor that are connected in series, the inverter circuit includes at least one bridge arm, the bridge arm includes a first switching transistor and a second switching transistor that are connected in series, the first switching transistor and the second switching transistor are connected in parallel at two ends of the first bus capacitor and the second bus capacitor that are connected in series, and a connection end of the first switching transistor and the second switching transistor is connected to a connection end of the first bus capacitor and the second bus capacitor through a third switching transistor and a fourth switching transistor that are connected in series.

According to a second aspect, this application provides a method for activating a power converter. The method includes: controlling an action of a switching transistor of a direct current conversion circuit in the power converter when a startup time interval reaches a time interval threshold, so that a voltage output by the direct current conversion circuit to a bus capacitor reaches a target voltage value, where the target voltage value is less than a rated voltage of the bus capacitor. The startup time interval is a time interval between a current power-on time and a last power-on time of the direct current conversion circuit, and the direct current conversion circuit is connected between a direct current power supply and the bus capacitor.

In this application, a current startup time interval is obtained, and when the startup time interval reaches a time interval threshold, it is determined that the current bus capacitor has been stored beyond a shelf life. The direct current conversion circuit is controlled, so that the voltage output by the direct current conversion circuit to the bus capacitor reaches a target voltage value, to implement activation and reforming on the bus capacitor, that is, restore an oxide film of a metal foil in the bus capacitor, without requiring a professional device such as an external power supply or adding a hardware circuit, thereby reducing product costs. In addition, a voltage connected to the bus capacitor does not exceed a rated voltage, so as to ensure that a charging current or a leakage current of the bus capacitor does not exceed a leakage current specification of the capacitor, thereby improving safety of the device.

In a possible implementation, the method includes: controlling the voltage output by the direct current conversion circuit to the bus capacitor to be boosted, and the voltage of the bus capacitor to reach the target voltage value after the voltage of the bus capacitor is boosted for target duration. Herein, a bus voltage is controlled to be boosted slowly at a set rate until the bus voltage reaches the target voltage value, so as to avoid a risk that the bus capacitor is broken down by a high voltage because the bus capacitor is boosted too fast.

In a possible implementation, the method includes: controlling the voltage output by the direct current conversion circuit to the bus capacitor to be boosted a plurality of times until the voltage at both ends of the bus capacitor reaches the target voltage value, where an amplitude of each voltage boost is a preset voltage value; and after each voltage boost, controlling the voltage output by the direct current conversion circuit to the bus capacitor to remain unchanged within a preset time interval. Herein, the bus voltage is controlled to be boosted a plurality of times, where an amplitude of each voltage boost is a preset voltage value; and after each voltage boost, the bus voltage is controlled to remain unchanged within a preset time interval, so as to avoid a risk that the bus capacitor is broken down by a high voltage because the bus capacitor is boosted too fast. In addition, the bus voltage is controlled to be boosted slowly and maintained for a period of time after each voltage boost, so that an oxide film of a metal foil in the bus capacitor is more fully restored.

### BRIEF DESCRIPTION OF DRAWINGS

FIG. 1 is a diagram of an application scenario of a power supply system according to this application;
FIG. 2 is a diagram of a structure of a power supply system according to this application;
FIG. 3 is a control diagram of a bus capacitor voltage according to this application;
FIG. 4 is another control diagram of a bus capacitor voltage according to this application;
FIG. 5 is a diagram of a structure of a direct current conversion circuit of a power converter according to this application;
FIG. 6 is another diagram of a structure of a direct current conversion circuit of a power converter according to this application;
FIG. 7 is a diagram of a structure of a power converter according to this application; and
FIG. 8 is a schematic flowchart of a method for activating a power converter according to this application.

### DESCRIPTION OF EMBODIMENTS

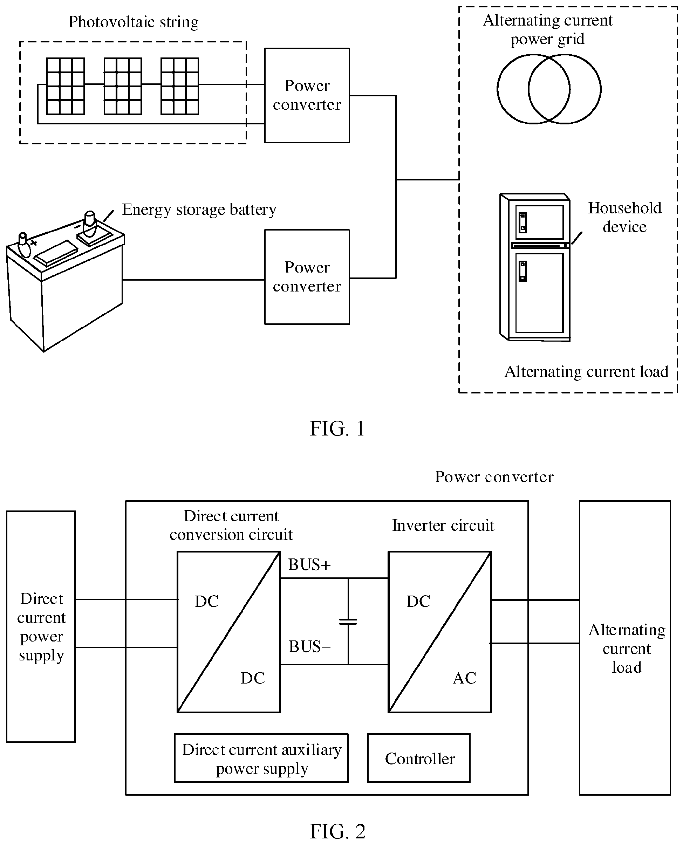

FIG. 1 is a diagram of an application scenario of a power supply system according to this application. The power supply system according to this application may include a direct current power supply and a power converter, where the direct current power supply may be a photovoltaic array. In a photovoltaic power supply system shown in FIG. 1, a photovoltaic array may include one or more photovoltaic strings connected in parallel, and one photovoltaic string may be formed by one photovoltaic module or a plurality of photovoltaic modules that are connected in series. When a direct current power supply is a photovoltaic array, a corresponding power converter may be an inverter. One end of the power converter is connected to the photovoltaic string, and the other end of the power converter is connected to an alternating current load. The power converter performs inversion on a direct current provided by the photovoltaic string, and outputs an alternating current to the alternating current load after the inversion. The alternating current load may be an alternating current power grid or an alternating current electric device. Herein, when the power converter is connected to the power grid, the alternating current load may be an alternating current power grid; and when the power converter is disconnected from the power grid, the alternating current load may be an alternating current electric device such as a household device.

In some feasible implementations, with reference to FIG. 1 again, the direct current power supply may further include an energy storage battery. When the direct current power supply is an energy storage battery, a corresponding power converter may be an energy storage converter. An output end of the energy storage battery may be connected to one end of the power converter, and the other end of the power converter is connected to the alternating current load. The power converter may invert a direct current provided by the energy storage battery, and output an alternating current obtained through inversion to the alternating current load for power supply.

In the application scenario shown in FIG. 1, the power converter includes a direct current conversion circuit and an inverter circuit (not shown in FIG. 1). A first end of the direct current conversion circuit is configured to connect to a direct current power supply; and a second end of the direct current conversion circuit is connected to a first end of the inverter circuit through a positive direct current bus and a negative direct current bus. A second end of the inverter circuit is configured to connect to an alternating current load. A bus capacitor is connected between the positive direct current bus and the negative direct current bus, and the bus capacitor may be configured to filter, store electric energy, buffer for protection, and the like. The bus capacitor may be an electrolytic capacitor. For example, the bus capacitor is an aluminum electrolytic capacitor. The aluminum electrolytic capacitor usually uses a metal foil, for example, a high-purity aluminum foil, as an anode, uses an insulating oxide layer of the aluminum foil, for example, aluminum oxide, as a dielectric, and uses electrolytic paper impregnated with electrolyte as a cathode. When the power converter is not started for a long time, the aluminum electrolytic capacitor is stored for an excessively long time, especially after the aluminum electrolytic capacitor is stored for a long time at a temperature beyond a normal temperature, an oxide film of the anode foil chemically reacts with the electrolyte, which may cause problems such as a decrease in a withstand voltage of the anode foil and an increase in a leakage current. If the electrolytic capacitor that has been stored for a long time is directly put into normal operation, for example, a rated voltage is directly applied to the electrolytic capacitor, a leakage current on the electrolytic capacitor is excessively high. This results in internal heat generation and a weakened local voltage withstand capability, potentially damaging the insulating oxide layer of the metal foil or even causing breakdown of the electrolytic capacitor. This greatly affects normal operation of the power converter. Therefore, it is necessary to perform activation and reforming on the electrolytic capacitor that has been stored beyond a shelf life, to restore an oxide film of an anode foil and reduce a leakage current of the electrolytic capacitor to a level before prolonged storage, so as to reduce a failure probability of the electrolytic capacitor. Currently, to implement activation and reforming of an electrolytic capacitor, an external professional device such as an external power supply needs to be connected or a hardware circuit needs to be added, which increases product costs. In addition, whether storage is beyond a shelf life needs to be manually identified and an activation operation needs to be completed, resulting in low activation and reforming efficiency.

In the power supply system according to this application, the power converter includes a direct current conversion circuit, an inverter circuit, a bus capacitor, and a controller. A first end of the direct current conversion circuit is configured to connect to a direct current power supply; and a second end of the direct current conversion circuit is connected to a first end of the inverter circuit through a positive direct current bus and a negative direct current bus. A second end of the inverter circuit is configured to connect to an alternating current load. A bus capacitor is connected between the positive direct current bus and the negative direct current bus. Before the power converter supplies power to the alternating current load, the controller may identify a time interval between a current power-on time and a last power-on time of the direct current conversion circuit of the power converter, to determine whether a bus capacitor inside the power converter has been stored beyond a shelf life. Specifically, the controller obtains a current startup time interval, and when the startup time interval reaches a time interval threshold, determines that the bus capacitor in the current power converter has been stored beyond a shelf life, that is, determines whether the insulating oxide layer of the metal foil in the bus capacitor has a risk of being damaged. The startup time interval is the time interval between the current power-on time and the last power-on time of the direct current conversion circuit. Herein, the power-on time may be a time at which the first end of the direct current conversion circuit is connected to the direct current power supply and starts to work, or the power-on time may be a time at which the power converter starts. The time interval threshold may be 6 to 36 months, or the like. The time interval threshold may be determined according to a specific device type of the bus capacitor, and is not limited herein. Further, the controller controls an action of a switching transistor in the direct current conversion circuit, so that the direct current conversion circuit transforms a direct current output by the direct current power supply, and the voltage output by the direct current conversion circuit to the bus capacitor reaches a target voltage value, where the target voltage value is less than a rated voltage of the bus capacitor. Herein, the controller in the power converter automatically detects the time interval between the current power-on time and the last power-on time of the direct current conversion circuit, that is, detects a storage time of the bus capacitor in a non-power-on state, so that activation and reforming are automatically performed when it is detected that the bus capacitor has been stored beyond a shelf life. No manual intervention is required, and activation and reforming efficiency is high. In addition, the controller controls the direct current conversion circuit in the power converter, so that the voltage output by the direct current conversion circuit to the bus capacitor reaches a target voltage value, to implement activation and reforming on the bus capacitor, that is, restore an oxide film of a metal foil in the bus capacitor, without requiring a professional device such as an external power supply or adding a hardware circuit, thereby reducing product costs. In addition, a voltage connected to the bus capacitor does not exceed a rated voltage, so as to ensure that a charging current or a leakage current of the bus capacitor does not exceed a leakage current specification of the capacitor, thereby improving safety of the device.

FIG. 2 is a diagram of a structure of a power supply system according to this application. The power supply system shown in FIG. 2 includes a direct current power supply and a power converter. One end of the power converter is connected to the direct current power supply in the photovoltaic power supply system, and the other end of the power converter is connected to an alternating current load. In the photovoltaic power supply system shown in FIG. 2, the direct current power supply is configured to provide energy input or power input for the power converter. The power converter may change, by using a direct current conversion circuit, a direct current provided by the direct current power supply (which may be a voltage boost, a voltage buck, or the like), and supply power to an alternating current load after performing voltage inversion on the transformed direct current through an inverter circuit. In the power supply system shown in FIG. 2, a second end of the direct current conversion circuit is connected to a first end of the inverter circuit through a positive direct current bus BUS+ and a negative direct current bus BUS-, the second end of the inverter circuit is configured to connect to the alternating current load, and a bus capacitor is connected between the positive direct current bus BUS+ and the negative direct current bus BUS-. The bus capacitor may filter out an interference component in the direct current output by the direct current conversion circuit, and may also be configured to store electric energy, so that output of the inverter circuit is stable. As shown in FIG. 2, the power converter further includes a controller and a direct current auxiliary power supply, and the direct current auxiliary power supply obtains power from a direct current power supply and supplies power to the controller. After the controller starts, a last startup time of the power converter that is recorded in a memory file such as a log may be obtained, and compared with the current startup time, to obtain a startup time interval, that is, a storage time of a current bus capacitor in the power converter, so as to determine whether the bus capacitor in the current inverter power converter has been stored beyond a shelf life. Further, the controller controls an action of a switching transistor in the direct current conversion circuit, so that a voltage output by the direct current power supply to the bus capacitor through the direct current conversion circuit reaches a target voltage value, where the target voltage value is less than a rated voltage of the bus capacitor. The controller automatically detects a time interval between a current power-on time and a last power-on time of the direct current conversion circuit, so that activation and reforming are automatically performed when it is detected that the bus capacitor has been stored beyond a shelf life, and no manual intervention is required. The activation and reforming efficiency is high. In addition, the controller controls the direct current conversion circuit in the power converter, so that the voltage output by the direct current conversion circuit to the bus capacitor reaches a target voltage value, to implement activation and reforming on the bus capacitor, that is, restore an oxide film of a metal foil in the bus capacitor, without requiring a professional device such as an external power supply or adding a hardware circuit, thereby reducing product costs. In addition, a voltage connected to the bus capacitor does not exceed a rated voltage, so as to ensure that a charging current or a leakage current of the bus capacitor does not exceed a leakage current specification of the capacitor, thereby improving safety of the device.

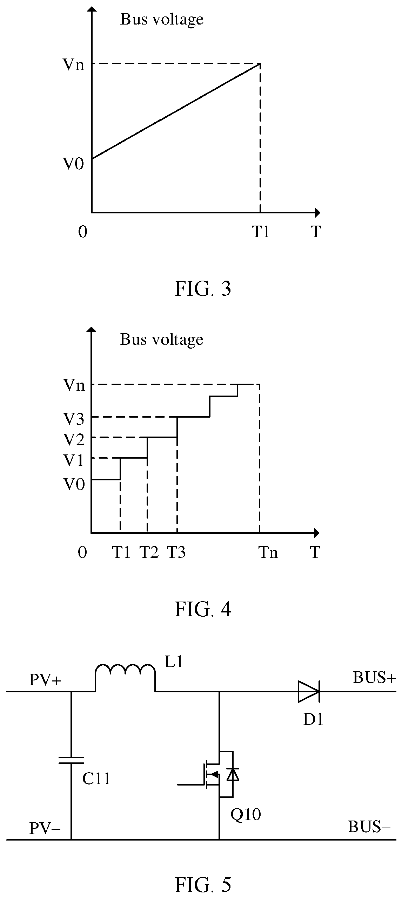

The following describes, with reference to FIG. 3 to FIG. 7, the power converter according to an embodiment of this application by using examples. In some feasible implementations, the controller in the power converter is configured to control a voltage output by the direct current conversion circuit to the bus capacitor to be boosted, and the voltage output by the direct current conversion circuit to the bus capacitor reaches a target voltage value after target duration, where the target duration is duration in which the controller controls the output voltage of the direct current conversion circuit to be boosted. FIG. 3 is a control diagram of a bus capacitor voltage according to this application. As shown in FIG. 3, the controller controls a voltage output by the direct current conversion circuit to the bus capacitor, that is, controls a bus voltage to be gradually boosted, and the bus voltage is boosted from V0 to Vn in duration T1. T1 is target duration, and Vn is a target voltage value. V0 may be a minimum operating voltage of a direct current auxiliary power supply in the power converter, or a voltage value that is increased based on the minimum operating voltage of the direct current auxiliary power supply. When the direct current power supply connected to the power converter is a photovoltaic string, Vn is a voltage at both ends of the photovoltaic string when an output current of the photovoltaic string is zero, or is a maximum operating bus voltage of the power converter. Herein, the controller controls a bus voltage to be boosted slowly at a set rate until the bus voltage reaches the target voltage value, so as to avoid a risk that the bus capacitor is broken down by a high voltage because the bus capacitor is boosted too fast.

In some feasible implementations, the controller controls the voltage output by the direct current conversion circuit to the bus capacitor to be boosted a plurality of times until the voltage at both ends of the bus capacitor reaches the target voltage value, where an amplitude of each voltage boost performed by the controller is a preset voltage value; and after each voltage boost, controls the voltage output by the direct current conversion circuit to the bus capacitor to remain unchanged within a preset time interval. FIG. 4 is another control diagram of a bus capacitor voltage according to this application. As shown in FIG. 4, the controller controls a voltage output by the direct current conversion circuit to the bus capacitor to be boosted a plurality of times, that is, controls a bus voltage to be boosted a plurality of times. The bus voltage is boosted from V0 to V1 in duration T1, and the bus voltage is controlled to remain unchanged and maintained at V1 for T2-T1. Then, the bus voltage is boosted from V1 to V2 in duration T2, and the bus voltage is controlled to remain unchanged and maintained at V2 for T3-T2. Then, the bus voltage is boosted from V1 to V3 in duration T3. After the bus voltage is boosted for n times, the bus voltage reaches Vn in duration Tn. Tn is target duration, and Vn is a target voltage value. V0 may be a minimum operating voltage of a direct current auxiliary power supply in the power converter or a voltage value that is increased based on the minimum operating voltage of the direct current auxiliary power supply. When the direct current power supply connected to the power converter is a photovoltaic string, Vn is a voltage at both ends of the photovoltaic string when an output current of the photovoltaic string is zero, or is a maximum operating bus voltage of the power converter. It may be understood that a boost amplitude of the bus voltage controlled by the controller each time may be the same or different, and duration for which the bus voltage is controlled to remain unchanged and maintained after each voltage boost may be the same or different. This is not limited herein. Herein, the controller controls the bus voltage to be boosted a plurality of times, where an amplitude of each voltage boost is a preset voltage value; and after each voltage boost, controls the bus voltage to remain unchanged within a preset time interval, so as to avoid a risk that the bus capacitor is broken down by a high voltage because the bus capacitor is boosted too fast. In addition, the controller controls the bus voltage to be boosted slowly and maintained for a period of time after each voltage boost, so that an oxide film of a metal foil in the bus capacitor is more fully restored.

In some feasible implementations, the direct current conversion circuit includes an input capacitor, an inductor, a switching transistor, and a diode, where a first end of the input capacitor is configured to connect to a positive electrode of the direct current power supply, the first end of the input capacitor is connected to a first end of the switching transistor through the inductor, the first end of the switching transistor is connected to a first end of the bus capacitor through the diode, a second end of the input capacitor is configured to connect to a negative electrode of the direct current power supply, and the second end of the input capacitor is connected to a second end of the switching transistor and a second end of the bus capacitor; and the controller is configured to control a change in a duty cycle of the switching transistor in the direct current conversion circuit, for example, control the duty cycle of the switching transistor in the direct current conversion circuit to decrease, so that the voltage output by the direct current conversion circuit to the bus capacitor reaches a target voltage value. FIG. 5 is a diagram of a structure of a direct current conversion circuit of a power converter according to this application. As shown in FIG. 5, the direct current conversion circuit includes an input capacitor C11, an inductor L1, a switching transistor Q10, and a diode D1. A first end of the input capacitor C11 is configured to connect to a positive electrode PV+ of a direct current power supply, the first end of the input capacitor C11 is connected to a first end of the switching transistor Q10 through the inductor L1, the first end of the switching transistor Q10 is connected to a positive electrode of the diode D1, and a negative electrode of the diode D1 is configured to connect to a positive direct current bus BUS+, that is, configured to connect to the first end of the bus capacitor. A second end of the input capacitor C11 is configured to connect to a negative electrode PV-of the direct current power supply, and the second end of the input capacitor C11 is connected to a second end of the switching transistor Q10. A connection end of the input capacitor C11 and the switching transistor Q10 is configured to connect to a negative direct current bus BUS-, that is, configured to connect to a second end of the bus capacitor. When it is detected that the bus capacitor has been stored beyond a shelf life, the controller controls the switching transistor Q10 in the direct current conversion circuit to be turned on or turned off, and controls a change in a duty cycle of the switching transistor Q10, so that a voltage output by the direct current conversion circuit to the bus capacitor reaches a target voltage value, so as to implement activation and reforming of the bus capacitor, without requiring a professional device such as an external power supply or adding a hardware circuit.

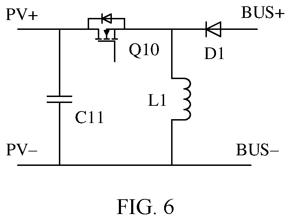

In some feasible implementations, the direct current conversion circuit includes an input capacitor, an inductor, a switching transistor, and a diode, where a first end of the input capacitor is configured to connect to a positive electrode of a direct current power supply, the first end of the input capacitor is connected to a first end of the inductor through the switching transistor, the first end of the inductor is connected to a first end of the bus capacitor through the diode, a second end of the input capacitor is configured to connect to a negative electrode of the direct current power supply, and the second end of the input capacitor is connected to a second end of the inductor and a second end of the bus capacitor. The controller is configured to control a change in a duty cycle of the switching transistor, so that the voltage output by the direct current conversion circuit to the bus capacitor reaches a target voltage value. FIG. 6 is another diagram of a structure of a direct current conversion circuit of a power converter according to this application. As shown in FIG. 6, the direct current conversion circuit includes an input capacitor C11, an inductor L1, a switching transistor Q10, and a diode D1, where a first end of the input capacitor C11 is configured to connect to a positive electrode PV+ of a direct current power supply, the first end of the input capacitor C11 is configured to connect to a first end of the switching transistor Q10, and a second end of the switching transistor Q10 is connected to a first end of the inductor L1. The first end of the inductor L1 is further connected to a negative electrode of the diode D1, and a positive electrode of the diode D1 is configured to be connected to a positive direct current bus BUS+, that is, configured to be connected to a first end of the bus capacitor. A second end of the input capacitor C11 is configured to connect to a negative electrode PV- of the direct current power supply, and the second end of the input capacitor C11 is connected to a second end of the inductor L1. A connection end of the input capacitor C11 and the inductor L1 is configured to connect to a negative direct current bus BUS-, that is, configured to connect to a second end of the bus capacitor. When it is detected that the bus capacitor has been stored beyond a shelf life, the controller controls the switching transistor Q10 in the direct current conversion circuit to be turned on or turned off, and controls a change in a duty cycle of the switching transistor Q10, so that a voltage output by the direct current conversion circuit to the bus capacitor reaches a target voltage value, so as to implement activation and reforming of the bus capacitor, without requiring a professional device such as an external power supply or adding a hardware circuit. In the direct current conversion circuit shown in FIG. 5 or FIG. 6, the switching transistor Q10 may be a metal-oxide semiconductor field-effect transistor (Metal-Oxide-Semiconductor Field-Effect Transistor, MOSFET), which is referred to as a MOS transistor for short, or may be an insulated gate bipolar transistor (insulated gate bipolar transistor, IGBT), or the like. This may be specifically determined according to an actual application scenario, and is not limited herein. When the switching transistor Q10 is a MOS transistor, the first end of the switching transistor Q10 may be a drain, and the second end thereof may be a source. When the switching transistor Q10 is an IGBT transistor, the first end of the switching transistor Q10 may be a collector, and the second end may be an emitter.

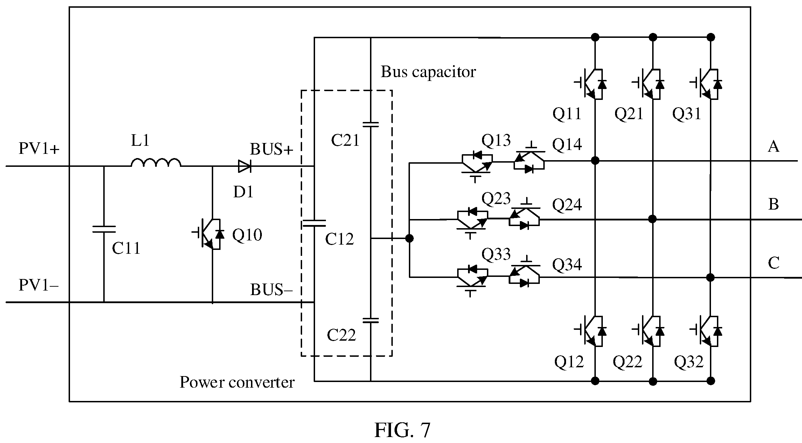

FIG. 7 is a diagram of a structure of a power converter according to this application. The power converter shown in FIG. 7 includes a direct current conversion circuit and an inverter circuit. A circuit structure of the direct current conversion circuit may be that of the direct current conversion circuit shown in FIG. 5 or FIG. 6. For example, the circuit structure of the direct current conversion circuit is that of the direct current conversion circuit shown in FIG. 5. A negative electrode of a diode D1 in the direct current conversion circuit is configured to connect to a positive direct current bus BUS+, that is, configured to connect to a first end of a bus capacitor C12. A connection end of the input capacitor C11 and the inductor L1 is configured to connect to a negative direct current bus BUS-, that is, configured to connect to a second end of the bus capacitor C12. The bus capacitor C21 and the bus capacitor C22 may be single capacitors, or the bus capacitor C21 and the bus capacitor C22 may be combined by a plurality of capacitors connected in series and/or in parallel. For example, the inverter circuit is a three-level inverter circuit. The inverter circuit may include three bridge arms (a bridge arm a, a bridge arm b, and a bridge arm c), and a phase-A port, a phase-B port, and a phase-C port of the power converter are respectively led out from bridge arm midpoints of the bridge arm a, the bridge arm b, and the bridge arm c. The bridge arm a may include two switching transistors Q11 and Q12 that are connected in series. The switching transistor Q11 and the switching transistor Q12 may be connected in parallel to two ends of the bus capacitor C21 and the bus capacitor C22 that are connected in series, and a connection end of the switching transistor Q11 and the switching transistor Q12 is used as the bridge arm midpoint of the bridge arm a to lead out the phase-A port, the bridge arm midpoint of the bridge arm a may be connected to a connection end of the bus capacitor C21 and the bus capacitor C22 through other switching transistors Q13 and Q14 that are connected in series. The bus capacitor C21 and the bus capacitor C22 are connected in series and then connected in parallel at both ends of the bus capacitor C12. The bridge arm b may include a switching transistor Q21, a switching transistor Q22, a switching transistor Q23, and a switching transistor Q24, and the bridge arm c may include a switching transistor Q31, a switching transistor Q32, a switching transistor Q33, and a switching transistor Q34. It may be understood that circuit structures of the bridge arm b and the bridge arm c are the same as the circuit structure of the bridge arm a. Details are not described herein again. It may be understood that the inverter circuit may alternatively be a five-level inverter circuit, a seven-level inverter circuit, or the like, which may be specifically determined according to an actual requirement of an application scenario, and is not limited herein. When it is detected that the bus capacitor has been stored beyond a shelf life, the controller controls the switching transistor Q10 in the direct current conversion circuit to be turned on or off, and controls a change in a duty cycle of the switching transistor Q10, so that a voltage output by the direct current conversion circuit to the bus capacitor C12, and to the bus capacitor C21 and the bus capacitor C22 reaches a target voltage value, to implement activation and reforming of each bus capacitor, without requiring a professional device such as an external power supply or adding a hardware circuit.

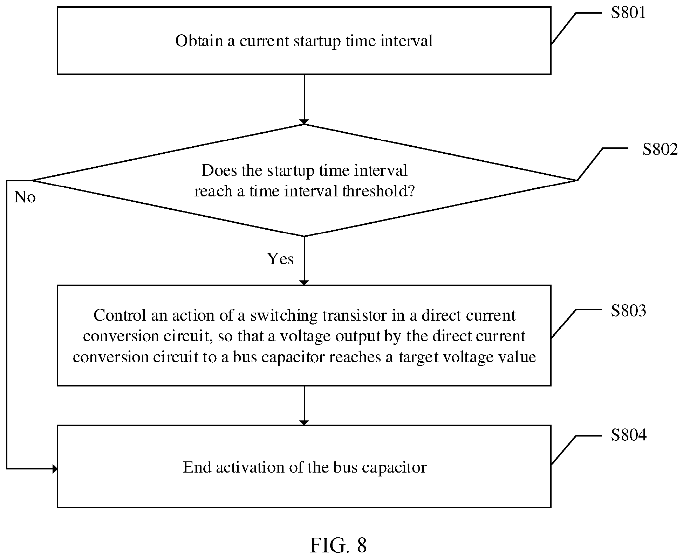

FIG. 8 is a schematic flowchart of a method for activating a power converter according to this application. The method for activating a power converter according to this application is applicable to a bus capacitor in any one of the power converters shown in FIG. 1 to FIG. 7. As shown in FIG. 8, the method for activating a power converter according to this application includes the following steps.

### S801: Obtain a current startup time interval.

In some feasible implementations, a time interval between a current power-on time and a last power-on time of a direct current conversion circuit may be identified if the time interval between the current power-on time and the last power-on time is longer, it indicates that a time interval of a current bus capacitor from a last time of receiving a direct current voltage is longer, to determine whether the bus capacitor has been stored beyond a shelf life. Specifically, the time interval between the current power-on time and the last power-on time of the direct current conversion circuit is obtained to obtain a current startup time interval, and when the startup time interval reaches a time interval threshold, it is determined that a current bus capacitor has been stored beyond a shelf life, that is, an insulating oxide layer of a metal foil in the bus capacitor has a risk of being damaged. The power-on time may be a time at which a first end of the direct current conversion circuit is connected to a direct current power supply and starts to work, or the power-on time may be a time at which a power converter starts. The time interval threshold may be 6 to 36 months, or the like. The time interval threshold may be determined according to a specific device type of the bus capacitor, and is not limited herein. The time interval of the current bus capacitor from the last time of receiving the direct current voltage is automatically detected, that is, a storage time of the bus capacitor in a non-powered-on state is detected, so that activation and reforming are automatically performed when it is detected that the bus capacitor has been stored beyond a shelf life. No manual intervention is required, and activation and reforming efficiency is high.

S802. Check whether the startup time interval reaches a time interval threshold; and if a determining result is yes, perform step S803; or if a determining result is no, perform step S804.

S803. Control an action of a switching transistor in the direct current conversion circuit, so that a voltage output by the direct current conversion circuit to the bus capacitor reaches a target voltage value.

### S804: End activation of the bus capacitor.

In some feasible implementations, when it is detected that the bus capacitor has been stored beyond a shelf life, an action of the switching transistor in the direct current conversion circuit is controlled, so that the direct current conversion circuit transforms a direct current output by the direct current power supply, and the voltage output by the direct current conversion circuit to the bus capacitor reaches a target voltage value, where the target voltage value is less than a rated voltage of the bus capacitor. Herein, the direct current conversion circuit is controlled, so that the voltage output by the direct current conversion circuit to the bus capacitor reaches a target voltage value, to implement activation and reforming on the bus capacitor, that is, restore an oxide film of a metal foil in the bus capacitor, without requiring a professional device such as an external power supply or adding a hardware circuit, thereby reducing product costs. In addition, a voltage connected to the bus capacitor does not exceed a rated voltage, so as to ensure that a charging current or a leakage current of the bus capacitor does not exceed a leakage current specification of the capacitor, thereby improving safety of the device.

In some feasible implementations, when it is detected that the bus capacitor has been stored beyond a shelf life, the voltage output by the direct current conversion circuit to the bus capacitor is controlled to be boosted, and the voltage output by the direct current conversion circuit to the bus capacitor reaches a target voltage value after target duration, where the target duration is duration in which the output voltage of the direct current conversion circuit is controlled to be boosted. Refer to FIG. 3 again. As shown in FIG. 3, a voltage that is output by the direct current conversion circuit to the bus capacitor (that is, a bus voltage) is controlled to be gradually boosted, and the bus voltage is boosted from V0 to Vn in duration T1. T1 is target duration, and Vn is a target voltage value. Herein, a bus voltage is controlled to be boosted slowly at a set rate until the bus voltage reaches the target voltage value, so as to avoid a risk that the bus capacitor is broken down by a high voltage because the bus capacitor is boosted too fast.

In some feasible implementations, when it is detected that the bus capacitor has been stored beyond a shelf life, the voltage output by the direct current conversion circuit to the bus capacitor is controlled to be boosted a plurality of times until a voltage at both ends of the bus capacitor reaches a target voltage value. An amplitude of each voltage boost is a preset voltage value; and after each voltage boost, the voltage output by the direct current conversion circuit to the bus capacitor is controlled to remain unchanged within a preset time interval. Refer to FIG. 4 again. As shown in FIG. 4, the voltage output by the direct current conversion circuit to the bus capacitor is controlled to be boosted a plurality of times, that is, a bus voltage is controlled to be boosted a plurality of times. The bus voltage is boosted from V0 to V1 in duration T1, and the bus voltage is controlled to remain unchanged and maintained at V1 for T2-T1. Then, the bus voltage is boosted from V1 to V2 in duration T2, and the bus voltage is controlled to remain unchanged and maintained at V2 for T3-T2. Then, the bus voltage is boosted from V1 to V3 in duration T3. After the bus voltage is boosted for n times, the bus voltage reaches Vn in duration Tn. Tn is target duration, and Vn is a target voltage value. It may be understood that a boost amplitude of the bus voltage controlled each time may be the same or different, and duration for which the bus voltage is controlled to remain unchanged and maintained after each voltage boost may be the same or different. This is not limited herein. Herein, the bus voltage is controlled to be boosted a plurality of times, where an amplitude of each voltage boost is a preset voltage value; and after each voltage boost, the bus voltage is controlled to remain unchanged within a preset time interval, so as to avoid a risk that the bus capacitor is broken down by a high voltage because the bus capacitor is boosted too fast. In addition, the bus voltage is controlled to be boosted slowly and maintained for a period of time after each voltage boost, so that an oxide film of a metal foil in the bus capacitor is more fully restored.

In this application, the power converter automatically detects, by using the controller, a time interval between a current power-on time and a last power-on time of the direct current conversion circuit, that is, detects a storage time of the bus capacitor in a non-powered-on state, so that activation and reforming are automatically performed when it is detected that the bus capacitor has been stored beyond a shelf life, and no manual intervention is required. The activation and reforming efficiency is high. The time interval threshold may be 6 to 36 months, or the like. In addition, the controller controls the direct current conversion circuit in the power converter, so that the voltage output by the direct current conversion circuit to the bus capacitor reaches a target voltage value, to implement activation and reforming on the bus capacitor, that is, restore an oxide film of a metal foil in the bus capacitor, without requiring a professional device such as an external power supply or adding a hardware circuit, thereby reducing product costs. In addition, a voltage connected to the bus capacitor does not exceed a rated voltage, so as to ensure that a charging current or a leakage current of the bus capacitor does not exceed a leakage current specification of the capacitor, thereby improving safety of the device.

## Claims

1. A power converter, wherein the power converter comprises a direct current conversion circuit, an inverter circuit, a bus capacitor, and a controller, wherein the direct current conversion circuit is connected between a direct current power supply and the bus capacitor, and the inverter circuit is connected between the bus capacitor and an alternating current load; and
the controller is configured to control an action of a switching transistor in the direct current conversion circuit when a startup time interval reaches a time interval threshold, so that a voltage output by the direct current conversion circuit to the bus capacitor reaches a target voltage value, wherein the target voltage value is less than a rated voltage of the bus capacitor, and the startup time interval is a time interval between a current power-on time and a last power-on time of the direct current conversion circuit.

2. The power converter according to claim 1, wherein the controller is configured to control the voltage output by the direct current conversion circuit to the bus capacitor to be boosted, and the voltage of the bus capacitor to reach the target voltage value after the voltage of the bus capacitor is boosted for target duration.

3. The power converter according to claim 1 or 2, wherein the controller is configured to: control the voltage output by the direct current conversion circuit to the bus capacitor to be boosted a plurality of times until the voltage at both ends of the bus capacitor reaches the target voltage value, wherein an amplitude of each voltage boost is a preset voltage value; and after each voltage boost, control the voltage output by the direct current conversion circuit to the bus capacitor to remain unchanged within a preset time interval.

4. The power converter according to any one of claims 1 to 3, wherein the direct current power supply is a photovoltaic string, and the target voltage value is an open-circuit voltage of the photovoltaic string.

5. The power converter according to any one of claims 1 to 3, wherein the direct current conversion circuit is connected to the bus capacitor through a positive direct current bus and a negative direct current bus, and the target voltage value is a maximum voltage that the positive direct current bus and the negative direct current bus are able to withstand.

6. The power converter according to any one of claims 1 to 5, wherein the direct current conversion circuit comprises an input capacitor, an inductor, a switching transistor, and a diode, a first end of the input capacitor is configured to connect to a positive electrode of the direct current power supply, the first end of the input capacitor is connected to a first end of the switching transistor through the inductor, the first end of the switching transistor is connected to a first end of the bus capacitor through the diode, a second end of the input capacitor is configured to connect to a negative electrode of the direct current power supply, and the second end of the input capacitor is connected to a second end of the switching transistor and a second end of the bus capacitor; and
the controller is configured to control a change in a duty cycle of the switching transistor, so that the voltage output by the direct current conversion circuit to the bus capacitor reaches the target voltage value.

7. The power converter according to any one of claims 1 to 5, wherein the direct current conversion circuit comprises an input capacitor, an inductor, a switching transistor, and a diode, a first end of the input capacitor is configured to connect to a positive electrode of the direct current power supply, the first end of the input capacitor is connected to a first end of the inductor through the switching transistor, the first end of the inductor is connected to a first end of the bus capacitor through the diode, a second end of the input capacitor is configured to connect to a negative electrode of the direct current power supply, and the second end of the input capacitor is connected to a second end of the inductor and a second end of the bus capacitor; and
the controller is configured to control a change in a duty cycle of the switching transistor, so that the voltage output by the direct current conversion circuit to the bus capacitor reaches the target voltage value.

8. The power converter according to any one of claims 1 to 7, wherein the bus capacitor comprises a first bus capacitor and a second bus capacitor that are connected in series, the inverter circuit comprises at least one bridge arm, the bridge arm comprises a first switching transistor and a second switching transistor that are connected in series, the first switching transistor and the second switching transistor are connected in parallel at two ends of the first bus capacitor and the second bus capacitor that are connected in series, and a connection end of the first switching transistor and the second switching transistor is connected to a connection end of the first bus capacitor and the second bus capacitor through a third switching transistor and a fourth switching transistor that are connected in series.

9. A method for activating a power converter, wherein the method comprises:
controlling an action of a switching transistor of a direct current conversion circuit in the power converter when a startup time interval reaches a time interval threshold, so that a voltage output by the direct current conversion circuit to a bus capacitor reaches a target voltage value, wherein the target voltage value is less than a rated voltage of the bus capacitor, wherein
the startup time interval is a time interval between a current power-on time and a last power-on time of the direct current conversion circuit, and the direct current conversion circuit is connected between a direct current power supply and the bus capacitor.

10. The method according to claim 9, wherein the method comprises:
controlling the voltage output by the direct current conversion circuit to the bus capacitor to be boosted, and the voltage of the bus capacitor to reach the target voltage value after the voltage of the bus capacitor is boosted for target duration.

11. The method according to claim 9 or 10, wherein the method comprises:
controlling the voltage output by the direct current conversion circuit to the bus capacitor to be boosted a plurality of times until the voltage at both ends of the bus capacitor reaches the target voltage value, wherein an amplitude of each voltage boost is a preset voltage value; and after each voltage boost, controlling the voltage output by the direct current conversion circuit to the bus capacitor to remain unchanged within a preset time interval.

12. The method according to to any one of claims 9 to 11, wherein the direct current power supply is a photovoltaic string, and the target voltage value is an open-circuit voltage of the photovoltaic string.

13. The method according to any one of claims 9 to 11, wherein the direct current conversion circuit is connected to the bus capacitor through a positive direct current bus and a negative direct current bus, and the target voltage value is a maximum voltage that the positive direct current bus and the negative direct current bus are able to withstand.

14. The method according to any one of claims 9 to 13, wherein the direct current conversion circuit comprises an input capacitor, an inductor, a switching transistor, and a diode, a first end of the input capacitor is configured to connect to a positive electrode of the direct current power supply, the first end of the input capacitor is connected to a first end of the switching transistor through the inductor, the first end of the switching transistor is connected to a first end of the bus capacitor through the diode, a second end of the input capacitor is configured to connect to a negative electrode of the direct current power supply, and the second end of the input capacitor is connected to a second end of the switching transistor and a second end of the bus capacitor; and
the controller is configured to control a change in a duty cycle of the switching transistor, so that the voltage output by the direct current conversion circuit to the bus capacitor reaches the target voltage value.

15. The method according to any one of claims 9 to 13, wherein the direct current conversion circuit comprises an input capacitor, an inductor, a switching transistor, and a diode, a first end of the input capacitor is configured to connect to a positive electrode of the direct current power supply, the first end of the input capacitor is connected to a first end of the inductor through the switching transistor, the first end of the inductor is connected to a first end of the bus capacitor through the diode, a second end of the input capacitor is configured to connect to a negative electrode of the direct current power supply, and the second end of the input capacitor is connected to a second end of the inductor and a second end of the bus capacitor; and
the controller is configured to control a change in a duty cycle of the switching transistor, so that the voltage output by the direct current conversion circuit to the bus capacitor reaches the target voltage value.
